# EUROPEAN PATENT SPECIFICATION

(11) **EP 2 607 049 B1**
(45) Date of publication and mention of the grant of the patent: **17.10.2018**
(21) Application number: 12198339.9
(22) Date of filing: 20.12.2012
(51) Int. Cl.: B29C 47/36, B29C 47/40, B29B 7/74, B29C 47/10, B29B 7/46, B29B 7/38

(54) **APPARATUS AND PROCESS FOR MIXING RUBBER COMPOUNDS**
VORRICHTUNG UND VERFAHREN ZUM MISCHEN VON GUMMIZUSAMMENSETZUNGEN
APPAREIL ET PROCÉDÉ POUR MÉLANGER DES COMPOSÉS CAOUTCHOUTÉS

(30) Priority: 22.12.2011 US 201113334228
(43) Date of publication of application: 26.06.2013
(73) Proprietor: The Goodyear Tire & Rubber Company, Akron, OH 44316-0001 (US)
(72) Inventor: Milan, Marie-Laure Stéphanie, L-2215 Luxembourg (LU); Linster, Tom Dominique, L-9370 Gilsdorf (LU); Knepper, Jean-Claude, L-9161 Ingeldorf (LU); Burg, Gary Robert, Massillon, OH Ohio 44646 (US); Endres, Christian, 200122 Pudong (CN); De Monte, Patrice, B-6700 Arlon (BE)
(74) Representative: Kutsch, Bernd

(56) References cited:
- EP-A1- 0 490 056
- EP-A1- 1 086 986
- EP-A1- 2 353 839
- EP-A2- 2 338 655
- WO-A1-97/09162
- WO-A1-2010/073275
- DE-A1- 10 157 820
- DE-U1- 29 710 235

## Description

### Field of the Invention

The present invention relates in general to the manufacturing of rubber compounds as used in tire manufacturing, and more particularly to a mixing apparatus and to processes for the manufacturing of rubber compounds using one or more multiple shaft extruder devices.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds required for the various tire lines of the manufacturer. For cost and efficiency reasons, tire manufacturers seek to limit the number of compounds required due to the extensive costs associated with each compound. Each compound typically requires the use of a Banbury mixer, which involves expensive capital expenditures. Furthermore, Banbury mixers have difficulty mixing up tough or very stiff rubber compounds. The compounds generated from the Banbury mixers are typically shipped to the tire building plants, thus requiring additional costs for transportation. The shelf life of the compounds is finite; and, if not used within a certain time period, the compounds are scrapped.

Thus an improved method and apparatus is desired which substantially reduces the need for the use of Banbury mixers while providing an apparatus and methodology to provide custom mixing. It should be possible to prepare both non-productive compounds and productive compounds. It is further desired to have a system at the tire building machine which provides for the ability to manufacture customizable compounds. Yet an additional problem to be solved is to generate the compounds continuously at the tire building machine.

US 2011 /0146883 A1, US 2011 /0146884 A1, US 2011 /0146885 A1 and US 2011/0146888 A1 describe various approaches to mixing rubber compounds using an extruder device together with a subsequent gear pump extruder device. The extruder device may be a pin type extruder, a twin screw extruder, a single screw extruder or a ring type extruder. The extruder device is fed with a premixed rubber compound and compounded in the extruder device with additives.

WO 2010/073275 A1 and US 2011/01467800 A1 describe a process and a device for producing an elastomeric compound. The process uses a continuous mixing device such as a multiple screw extruder or a ring extruder together with a batch mixing device. A compound is first mixed in a Banbury, discharged from the Banbury and then fed into the continuous mixing device.

US 2004/0094862 A1, US 2007/0121421 A1 and US 2011/0110178 A1 describe in further detail multiple screw extruder devices (also called multiple shaft extruder devices) as they can be used in the production of elastomeric compounds.

The use of multiple shaft extruder devices for mixing rubber compounds is also described in EP-A-0 490 056, EP-A-2 338 655, WO-A-97/09162, EP-A-2 353 839 and DE-A-101 57 820. A further apparatus for mixing a rubber compound using a screw extruder is described in DE-U1-297 10 235.

### Summary of the Invention

The invention relates to a mixing apparatus in accordance with claim 1 and to a process in accordance with claim 10 or 12.

Dependent claims refer to preferred embodiments of the invention.

In one aspect of the present invention, a mixing apparatus for manufacturing a rubber compound is disclosed, the mixing apparatus comprising a plurality of multiple shaft extruder devices each comprising at least one inlet for receiving a plurality of materials to be fed into the extruder device and an outlet for discharging a mixed material extruded by the extruder device, wherein the multiple shaft extruder devices are arranged in such a way that operatively the extrudate of at least one of the plurality of multiple shaft extruder devices can be fed into the inlet of at least one other of plurality of multiple shaft extruder devices. Each of the plurality of multiple shaft extruder devices is a ring extruder device.

Each ring extruder device comprises at least six parallel screws, alternatively at least 8 or at least parallel 12 screws, jointly turning clockwise or counterclockwise in the same or different directions.

In still another example aspect of the present invention, the plurality of multiple shaft extruder devices may be arranged to operate in sequence. Preferably, two or three multiple shaft extruder devices arranged to operate in sequence.

In yet another example aspect of the present invention, the mixing apparatus may further comprise at least one feeding gear pump which is arranged in such a way that it operatively feeds at least one of the plurality of multiple shaft extruder devices with at least one material. In an alternative aspect of the present invention, the mixing apparatus may comprise any other known feeding device such as a further multiple shaft extruder device, a ring extruder device, or a twin-screw extruder device.

In still another example aspect of the present invention, the mixing apparatus may further comprise at least one downstream gear pump which is arranged in such a way that it is operatively fed by at least one of the plurality of multiple shaft extruder devices with the mixed material extruded by the at least one multiple shaft extruder device. In an alternative aspect of the present invention, the mixing apparatus may comprise any other known mixing or transporting device such as a further multiple shaft extruder device, a ring extruder device, or a twin-screw extruder device.

In yet another example aspect of the present invention, the plurality of multiple shaft extruder devices are arranged to operate in sequence and at least one downstream gear pump is located between two of the plurality of multiple shaft extruder devices in such a way that it is operatively fed by one of said two multiple shaft extruder devices with the material mixed in said multiple shaft extruder device and feeds the other of said two multiple shaft extruder devices with at least one material.

Each of the plurality of the multiple shaft extruder devices comprises an outlet at the downstream end of the respective multiple shaft extruder device and a plurality of inlets along a shaft of the respective multiple shaft extruder device. The inlets of the plurality of inlets are located at different respective distances with respect to the outlet.

In yet another example aspect of the present invention, mixing apparatus for manufacturing a rubber compound may include, the mixing apparatus comprising a plurality of multiple shaft extruder devices, each including at least one inlet for receiving a plurality of materials to be fed into the extruder device and an outlet for discharging a mixed material extruded by the extruder device, wherein the multiple shaft extruder devices are arranged to operate in parallel in such a way that the extrudates of the plurality of multiple shaft extruder devices may be fed together into the inlet of at least one further mixing device.

In still another example aspect of the present invention, the at least one further mixing device is a multiple shaft extruder device or a gear pump.

Each of the plurality of multiple shaft extruder devices may again be a ring extruder device such as a ring extruder device comprising at least six parallel screws, alternatively at least 8 or at least parallel 12 screws, jointly turning clockwise or counterclockwise in the same or different directions.

In yet another example aspect of the present invention, the mixing apparatus may include two or three multiple shaft extruder devices arranged to operate in parallel.

In still another example aspect of the present invention, the mixing apparatus comprises at least one feeding gear pump which is arranged in such a way that it operatively feeds at least one of the plurality of multiple shaft extruder devices with at least one material.

In yet another example aspect of the present invention, each of the plurality of the multiple shaft extruder devices comprises an outlet at the downstream end of the respective multiple shaft extruder device and a plurality of inlets along a shaft of the respective multiple shaft extruder device. The inlets of the plurality of inlets may be located at different respective distances with respect to the respective outlet.

In still another example aspect of the present invention, a process of manufacturing a rubber compound is disclosed, the process includes a multiple shaft extruder device; feeding the multiple shaft extruder device with at least one polymer raw material or with a mixture of at least two different polymer raw materials; feeding the multiple shaft extruder device with at least one further raw material; mixing the at least one polymer raw material or the mixture of the different polymer raw materials and the at least one further raw material in the multiple shaft extruder device to prepare a rubber compound; and extruding the rubber compound from the multiple shaft extruder device.

In yet another example aspect of the present invention, a process of manufacturing a rubber compound is disclosed, the process includes a plurality of multiple shaft extruder devices; feeding at least one of the multiple shaft extruder devices with at least one polymer raw material or a mixture of different polymer raw materials; feeding each of the multiple shaft extruder devices with at least one material; operating the plurality of multiple shaft extruder devices in parallel and mixing in each of the multiple shaft extruder devices a respective rubber compound; and extruding the respective rubber compounds from each of the multiple shaft extruder devices.

In still another example aspect of the present invention, a process of manufacturing a rubber compound is disclosed, the process includes a plurality of multiple shaft extruder devices; operating the plurality of multiple shaft extruder devices; feeding a first of the plurality of multiple shaft extruder devices with at least one polymer raw material or a mixture of different polymer raw materials; feeding the first multiple shaft extruder devices with at least one further raw material; mixing in the first multiple shaft extruder devices the at least one polymer raw material or the respective mixture of the different polymer raw materials and the at least one further raw material to prepare in the first multiple shaft extruder device a rubber compound; extruding the rubber compound from the first multiple shaft extruder device; feeding the rubber compound into a second multiple shaft extruder device of the plurality of multiple shaft extruder devices.

The polymer raw material may be a liquid polymer raw material, a mixture of liquid polymer raw materials, a polymer raw material in the shape of pellets or granules, a mixture of granules or pellets of at least two different polymer raw materials, a polymer raw material in the shape of a powder, a mixture of at least two different polymer raw material powders, a polymer raw material derived from in-situ polymerization, a recycled polymer raw material, a reclaimed polymer raw material, or a depolymerized polymer raw material. The at least one further raw material may be selected from the group consisting of a filler material such as rubber reinforcing carbon black, silica or a platy filler such as clay; a coupling agent; a tackifier resin; a reinforcing resin; a processing aid; an antioxidant; an antiozonant; a stearic acid; an activator; a wax; an oil; a vulcanizing agent such as a sulfur vulcanizing agent; a peptizing agent; and a mixture of one or more of these materials.

### Definitions

"Polymer raw material" means a rubber material or a polymer material which can be compounded to a rubber composition (also referred to as an elastomeric composition) but which is exclusive of (or at least essentially exclusive of) a filler such as carbon black, silica or a platy filler, a coupling agent, a tackifier resin, a reinforcing resin; a processing aid, an antioxidant, an antiozonant, a stearic acid, an activator, a wax, an oil, a sulfur vulcanizing agent and a peptizing agent. The term "polymer raw material" however may include a rubber material or a polymer material that comprises a separating agent such as calcium carbonate or silica powder in an amount of up to 15% in weight of the rubber or polymer material.

"Productive compound" means a rubber compound that includes accelerators, sulfur and other materials needed to cure the rubber.

"Non-productive compound" means a rubber compound that does not have one or more of the following items: (1) accelerator; (2) sulfur; or (3) curing agent(s).

### Brief Description of the Drawings

The present invention will be described by way of example and with reference to the accompanying drawings in which:
FIG. 1 is a schematic of a mixing apparatus usable with the first and second embodiment of the present invention;
FIG. 2 is a schematic of a mixing apparatus in a first embodiment of the present invention;
FIG. 3 is a schematic of a mixing apparatus in a second embodiment of the present invention; and
FIG. 4 is a schematic of a mixing apparatus usable with the first and second embodiment of the present invention similar to the mixing apparatus of Fig. 1, but showing more details.

### Detailed Description of the Invention

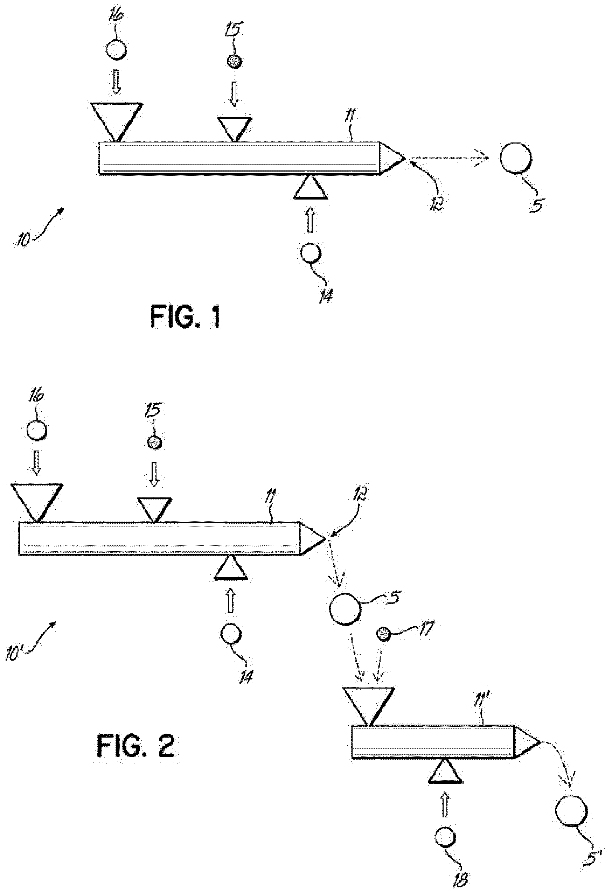

Figure 1 illustrates a mixing apparatus 10 usable for a continuous mixing process suitable for use in preparing rubber compositions for tires or tire components. The use of the mixing apparatus 10 is, however, not limited to tire applications and may be used for example, to make other rubber components not related to tires such as conveyors, hoses or belts. The mixing apparatus 10 may be provided directly at the tire building machinery for direct application of the rubber composition to a tire building drum, to another tire building apparatus, or to a substrate in general.

Figure 1 illustrates a mixing apparatus 10 for a continuous mixing process which includes a multiple shaft extruder device 11. The multiple shaft extruder device 11 has an inlet for feeding the multiple shaft extruder device 11 with a first raw material 16 in the form of a polymer raw material or a mixture of at least two different polymer raw materials. The multiple shaft extruder device 11 has a further inlet for feeding the multiple shaft extruder device 11 with a second raw material 15 (or a mixture of raw materials) and a third raw material 14 (or a mixture of raw materials). In an alternative design, the multiple shaft extruder device 11 may also have only one inlet (or only two inlets) for feeding it. In this case, the various raw materials 16, 15, 14 may be fed together into the multiple shaft extruder device 11 using this one inlet (or these two inlets).

The polymer raw material is a rubber material which can be compounded to a rubber composition (also referred to as an elastomeric composition) but which is exclusive of, or at least substantially exclusive of, a filler such as carbon black, silica or a platy filler, a coupling agent, a tackifier resin, a reinforcing resin; a processing aid, an antioxidant, an antiozonant, a stearic acid, an activator, a wax, an oil, a sulfur vulcanizing agent and a peptizing agent. The polymer raw material may, however, comprise a separating agent, preferably calcium carbonate or silica powder, in an amount of up to 15%, preferably 2% to 10%, or between 5% to 10%, in weight of the respective polymer raw material. Such separating agent is particularly useful when the polymer raw material is granulated or pelletized. The polymer raw material may be a granulated or pelletized polymer raw material comprising up to 15% of a separating agent such as calcium carbonate or silica.

The second and third raw material(s) may include a filler material such as carbon black, silica or a platy filler, a coupling agent, a tackifier resin, a reinforcing resin; a processing aid, an antioxidant, an antiozonant, a stearic acid, an activator, a wax, an oil, a sulfur vulcanizing agent and a peptizing agent. The multiple shaft extruder device 11 mixes a rubber compound 5 which is extruded through the outlet 12. Preferably, the mixed rubber compound 5 is a productive compound, i.e., a rubber compound that includes accelerators, sulfur and other materials needed to cure the rubber. It may, however, also be a non-productive compound, i.e., a rubber compound that does not have one or more of the following items: (1) accelerator; (2) sulfur; or (3) curing agent(s). Such a non-productive compound requires a further mixing step as further explained below.

In another example, the multiple shaft extruder device 11 may have a design as basically shown in US-A-2006/0140048 (see in particular Figs. 1-4).

The extruder device warms the mixed materials to the temperature in the range of 80 °C to 200 °C, preferably 80 °C to 150°C, and masticates them as needed.

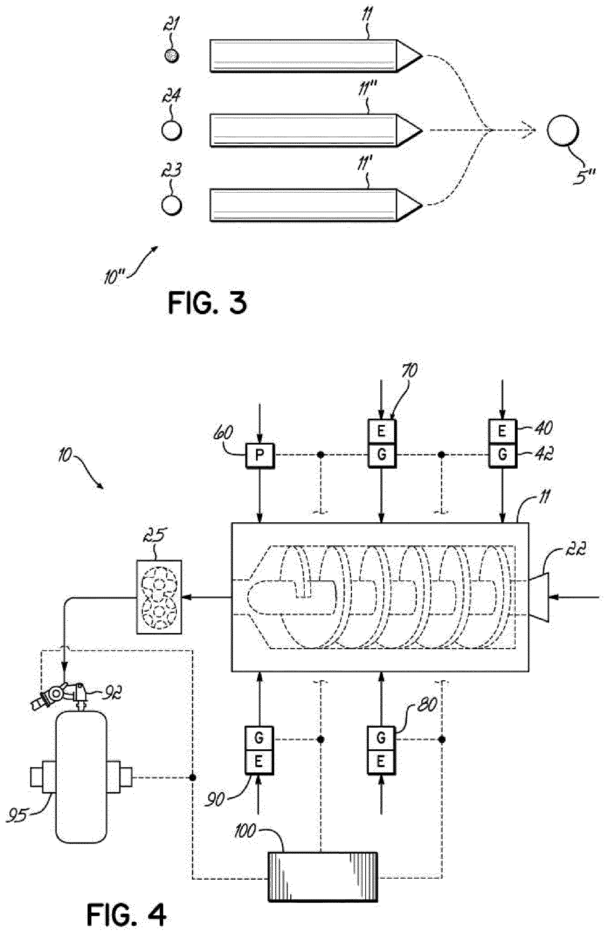

Downstream of the multiple shaft extruder devices 11, a gear pump extruder device 25 may be provided as further explained with Fig. 4. The mixed rubber compound 5 is fed into this gear pump extruder device 25.

Figure 2 illustrates a first embodiment of a mixing apparatus 10' in accordance with the present invention for a continuous mixing process suitable for use for making rubber compositions for tires or tire components. The mixing apparatus 10' is, however, again not limited to tire applications and may be used for example, to make other rubber components not related to tires such as conveyors, hoses or belts. The mixing apparatus 10' may again be located at the tire building machinery for direct application of the rubber composition to a tire building drum, to another tire building apparatus, or to a substrate in general.

The embodiment of Fig. 2 differs from the Fig. 1 in that it comprises the first multiple shaft extruder device 11 of Fig. 1 and a second multiple shaft extruder device 11' which is preferably of the same or a similar design as the first multiple shaft extruder device 11. The devices 11, 11' operate sequentially, i.e., the mixed rubber compound 5 exiting the outlet 12 is fed into the second multiple shaft extruder device 11'. In the embodiment of Fig. 2, the mixed rubber compound is preferably a non-productive compound.

The multiple shaft extruder device 11' comprises an inlet for the extruded mixed rubber compound 5 and preferably also one or more further inlets for feeding the multiple shaft extruder device 1 1' with a fourth raw material 17 (or a mixture of raw materials) and optionally also a fifth raw material 18 (or a mixture of raw materials). The fourth or fifth raw material 17, 18 may include a precompounded rubber material, a polymer raw material, a filler such as carbon black, silica or a platy filler, a coupling agent, a tackifier resin, a reinforcing resin; a masterbatch material, a processing aid, an antioxidant, an antiozonant, a stearic acid, an activator, a wax, an oil, a sulfur vulcanizing agent and a peptizing agent. Preferably, the fourth or fifth raw materials are materials needed to make a productive rubber compound out of the non-productive rubber compound fed into the multiple shaft extruder device 11' (i.e,. one or more accelerators, sulfur and curing agent(s)).

The multiple shaft extruder device 11' mixes a rubber compound 5' which is extruded through the outlet of the multiple shaft extruder device 11'.

Figure 3 illustrates a second embodiment of a mixing apparatus 10" in accordance with the present invention for a continuous mixing process suitable for use for making rubber compositions for tires or tire components. The continuous mixing apparatus 10" is again not limited to tire applications and may be used, for example, to make other rubber components not related to tires such as conveyors, hoses or belts. The mixing apparatus 10" may again be provided directly at the tire building machinery for direct application of the rubber composition to a tire building drum, to another tire building apparatus, or to a substrate in general.

The embodiment of Fig. 3 differs from Fig. 1 in that it comprises the first multiple shaft extruder device 11 of Fig. 1 and a second and third multiple shaft extruder device 11', 11" which are preferably of the same or a similar design as the first multiple shaft extruder device 11. The devices 11, 11', 11" operate in parallel, i.e., each mixes a rubber compound separately using respective raw materials 21, 23, 24 fed into the respective inlets of the multiple shaft extruder devices 11, 11', 11" as already explained above in the context of Fig. 1 which are then extruded and brought together and collectively referred to in Fig. 3 as mixed rubber compound 5".

In this second embodiment, the mixed rubber compound 5" may be a non-productive compound.

Downstream the apparatus 10" may include the multiple shaft extruder devices 11, 11', 11" a further mixing device may be provided to mix a productive compound. This device may be a gear pump mixing device, or the multiple shaft mixing device 11 as shown in Fig. 1 or even a further apparatus 10, 10' comprising multiple shaft mixing devices 11, 11' as shown in Fig. 2 or Fig. 1.

Figure 4 illustrates the mixing apparatus 10 of Fig. 1 with some further components for supplying raw materials, handling the extrudate and operating the overall apparatus as it can be used in Fig. 2 or 3, i.e., the apparatus of Fig. 4 can be used in an apparatus essentially similar to Fig. 2 with multiple shaft extruder devices 11 operating in sequence or essentially similar to Fig. 3 with multiple shaft extruder devices 11 operating in parallel. Even a combination of the arrangements in accordance with Fig. 2 and Fig. 3 is possible.

The mixing apparatus 10 of Fig. 4 may include a multiple shaft extruder device 11 having a design as basically shown in US-A-2006/0140048 (see in particular Figs. 1-4). It comprises an inlet 22, through which a first raw material in the form of a polymer raw material or a mixture of at least two different polymer raw materials may be fed into the multiple shaft extruder device 11. It further comprises an extruder 40 and a subsequent gear pump 42, a first additive pumping device 70 (which may include an extruder and a gear pump), an oil pump 60, a second additive pumping device 80 (which may include an extruder and a gear pump) and a third additive pumping device 90 (which may include an extruder and a gear pump). The extrudate of the multiple shaft extruder device 11 is fed into a gear pump 25 and applied to a green tire surface at a tire building station 95 using a shaping die 92. The apparatus 10 is operated with a computer controller 100 managing the overall mixing, extrusion and application process.

Using the extruder 40 and the gear pump 42, a rubber compound may be added to the multiple shaft extruder device 11. This rubber compound is preferably a non-productive rubber composition.

Oil may be optionally injected into the multiple shaft extruder device 11 via the oil pump 60 and/or at any other desired location to control the viscosity of the compound mixture.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or powder encapsulated into a resin or rubber base. Examples of accelerator compositions are described in more detail below.

Other additives include a curative agent or precursor, which may also be added to the extruder 10 via additive pump 90. One example of a curative agent is sulfur. The sulfur may be added in solid form or powder encapsulated into a resin or rubber base.

The gear pump 25 is preferably located adjacent a tire building station 95 for direct application onto a core, tire blank buffed carcass for a retreaded tire or tire building drum. Gear pump 25 preferably comprises a nozzle or shaping die 92 which applies the compound formulation output from the gear pump 25 directly onto the tire building machine 95 in preferably continuous strips which are wound onto a tire building drum or core.

In addition to what is shown in Figs. 1 to 4, one, each or several of the multiple shaft extruder devices 11, 11', 11" may be connected close to the respective outlet 12 of the multiple shaft extruder devices 11, 11', 11" to a vacuum pump device to remove water or alcohols such as ethanol from the respective mixed compound 5, 5', 5" prior to its exit from the respective extruder device.

The following are compositions which may be used in conjunction with the present invention.

In one example, a single accelerator system may be used in the rubber compound, i.e., a primary accelerator. The primary accelerator(s) may be used in total amounts ranging from 0.5 to 4.0, alternatively 0.8 to 1.5, phr. In another example, combinations of a primary and a secondary accelerator might be used with the secondary accelerator being used in smaller amounts, such as from 0.05 to 3.00 phr, in order to activate and to improve the properties of the vulcanized rubber. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In another example, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

Representative rubbers that may be used in the rubber compound include acrylonitrile/diene copolymers, natural rubber, liquid polymers as described for instance in EP-B1-2065221, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers or functionalized rubbers may also be used. Preferably, the rubber is granulated or pelletized natural rubber, cis-1,4-polyisoprene, styrene-butadiene copolymers, or cis-1,4-polybutadiene.

The processes in accordance with the present invention are particularly suitable for compounding highly filled batches by a single stage process. For instance, masterbatches may be obtained directly from synthetic rubber polymerization (for example, for butyl rubber, polybutadiene rubber or styrene-butadiene rubber). In this case, the multiple shaft extruder device is preferably directly fed with rubber pieces or ground rubber (or mixtures of such rubber materials) obtained from the polymerization production. This avoids the compacting of manufactured rubber in bales. To produce a masterbatch, the multiple shaft extruder device is then also fed at one of its inlets with one or more fillers, a coupling agent and additives if necessary (such as processing aids, antioxidants, and oil). In case of a coupling agent addition to the masterbatch, a coupling reaction between silica and coupling agent can be initiated.

The rubber compound may contain a platy filler. Representative examples of platy fillers include clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, a reinforcing resin; processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from 10 to 150 parts by weight of rubber, preferably 50 to 100 phr. Typical amounts of silica range from 10 to 250 parts by weight, preferably 30 to 130 parts by weight and blends of silica and carbon black are also included. Typical amounts of tackifier resins comprise from 2 to 10 phr. Typical amounts of reinforcing resins comprise from 2 to 40 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 50 phr. Sulfur vulcanizing agents, such as elemental sulfur, amine disulfides, polymeric polysulfides, sulfur olefin adducts, and mixtures thereof, are used in an amount ranging from 0.2 to 12.0 phr. Typical amounts of peptizers comprise from 0.1 to 1.0 phr.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. A mixing apparatus for manufacturing a rubber compound, the mixing apparatus (10) comprising a plurality of multiple shaft extruder devices (11, 11', 11") each comprising at least one inlet for receiving a plurality of materials to be fed into the extruder device and an outlet (12) for discharging a mixed material extruded by the extruder device, wherein
(i) the multiple shaft extruder devices (11, 11', 11") are arranged in such a way that operatively the extrudate of at least one of the plurality of multiple shaft extruder devices may be fed into the inlet of at least one other of the plurality of multiple shaft extruder devices; or
(ii) the multiple shaft extruder devices (11, 11', 11") are arranged to operate in parallel in such a way that operatively the extrudates of the plurality of multiple shaft extruder devices can be fed together into the inlet of at least one further mixing device; **characterized in that**
each of the plurality of multiple shaft extruder devices is a ring extruder device comprising at least six parallel screws jointly turning clockwise or counterclockwise in the same or different directions; and **in that**
each of the plurality of the multiple shaft extruder devices (11, 11', 11") comprises an outlet (12) at the downstream end of the respective multiple shaft extruder device and a plurality of inlets along a shaft of the respective multiple shaft extruder device, wherein the inlets of the plurality of inlets for each of the plurality of multiple shaft extruder devices (11, 11', 11") are located at different respective distances with respect to the outlet (12).

2. The mixing apparatus of claim 1 wherein each ring extruder device comprises at least at least 8 or at least parallel 12 screws, jointly turning clockwise or counterclockwise in the same or different directions.

3. The mixing apparatus of claim 1 wherein the plurality of multiple shaft extruder devices (11, 11', 11") are arranged to operate in sequence, the mixing apparatus (10) preferably comprising two or three such multiple shaft extruder devices arranged to operate in sequence.

4. The mixing apparatus of claim 1 further comprising at least one feeding gear pump (25) which is arranged in such a way that it operatively feeds at least one of the plurality of multiple shaft extruder devices (11, 11', 11") with at least one material.

5. The mixing apparatus of claim 3 further comprising at least one feeding gear pump (25) which is arranged in such a way that it operatively feeds the first multiple shaft extruder device (11) in the sequence of multiple shaft extruder devices (11, 11', 11") with at least one material.

6. The mixing apparatus of claim 1 further comprising at least one downstream gear pump (25) which is arranged in such a way that it is operatively fed by at least one of the plurality of multiple shaft extruder devices (11, 11', 11") with the mixed material extruded by the at least one multiple shaft extruder device.

7. The mixing apparatus of claim 1 wherein the plurality of multiple shaft extruder devices (11, 11', 11") are arranged to operate in sequence and wherein at least one downstream gear pump (25) is located between two of the plurality of multiple shaft extruder devices in such a way that it is operatively fed by one of said two multiple shaft extruder devices with the material mixed in said multiple shaft extruder device and feeds the other of said two multiple shaft extruder devices with at least one material.

8. The mixing apparatus of claim 1 wherein the at least one further mixing device is a multiple shaft extruder device or a gear pump.

9. The mixing apparatus of claim 1 comprising two or three multiple shaft extruder devices arranged to operate in parallel.

10. A process of manufacturing a rubber compound, the process comprising:
providing a mixing apparatus in accordance with at least one of the previous claims;
feeding at least one of the multiple shaft extruder devices with at least one polymer raw material (16) or a mixture of different polymer raw materials through an inlet of the plurality of inlets;
feeding each of the multiple shaft extruder devices (11, 11', 11") with at least one further raw material (15) through a different inlet of the plurality of inlets;
operating the plurality of multiple shaft extruder devices in parallel (11, 11', 11") and mixing in each of the multiple shaft extruder devices a respective rubber compound (5, 5', 5"); and
extruding the respective rubber compounds (5, 5', 5") from each of the multiple shaft extruder devices (11, 11', 11").

11. The process of claim 10 further comprising mixing the respective rubber compounds (5, 5', 5") extruded from each of the multiple shaft extruder devices (11, 11', 11") in a subsequent mixing device such as subsequent multiple shaft extruder device, or feeding the respective rubber compounds extruded (5, 5', 5") from each of the multiple shaft extruder devices (11, 11', 11") to a common gear pump device (25).

12. A process of manufacturing a rubber compound, the process comprising:
providing a mixing apparatus in accordance with at least one of the previous claims;
operating the plurality of multiple shaft extruder devices (11, 11', 11") sequentially;
feeding a first of the plurality of multiple shaft extruder devices with at least one polymer raw material (16) or a mixture of different polymer raw materials through an inlet of the plurality of inlets;
feeding the first multiple shaft extruder device (11) with at least one further raw material (15) through a different inlet of the plurality of inlets;
mixing in the first multiple shaft extruder device (11) the at least one polymer raw material (16) or the respective mixture of the different polymer raw materials and the at least one further raw material (15) to prepare in the first multiple shaft extruder device (11) a rubber compound (5);
extruding the rubber compound (5) from the first multiple shaft extruder device (11);
feeding the rubber compound (5) into a second multiple shaft extruder device (11') of the plurality of multiple shaft extruder devices (11, 11', 11").

## Patentansprüche

1. Mischvorrichtung zur Herstellung einer Kautschukmischung, wobei die Mischvorrichtung (10) eine Vielzahl von Mehrwellenextrudervorrichtungen (11, 11', 11") umfasst, die jede mindestens einen Einlass zur Aufnahme einer Vielzahl von in die Extrudervorrichtung einzuspeisenden Materialien und einen Auslass (12) zur Abfuhr eines von der Extrudervorrichtung extrudierten gemischten Materials umfassen, wobei
(i) die Mehrwellenextrudervorrichtungen (11, 11', 11") auf solche Weise angeordnet sind, dass das Extrudat von mindestens einer der Vielzahl von Mehrwellenextrudervorrichtungen wirksam in den Einlass von mindestens einer anderen der Vielzahl von Mehrwellenextrudervorrichtungen eingespeist werden kann; oder
(ii) die Mehrwellenextrudervorrichtungen (11, 11', 11") so angeordnet sind, dass sie auf solche Weise parallel arbeiten, dass die Extrudate der Vielzahl von Mehrwellenextrudervorrichtungen wirksam zusammen in den Einlass mindestens einer weiteren Mischvorrichtung eingespeist werden können; **dadurch gekennzeichnet, dass**
jede der Vielzahl von Mehrwellenextrudervorrichtungen eine Ringextrudervorrichtung ist, die mindestens sechs parallele Schnecken umfasst, die sich gemeinsam im Uhrzeigersinn oder Gegenuhrzeigersinn in derselben oder unterschiedlichen Richtungen drehen; und dass
jede der Vielzahl von Mehrwellenextrudervorrichtungen (11, 11', 11") einen Auslass (12) am stromabwärtigen Ende der jeweiligen Mehrwellenextrudervorrichtung und eine Vielzahl von Einlässen entlang einer Welle der jeweiligen Mehrwellenextrudervorrichtungen umfasst, wobei sich die Einlässe der Vielzahl von Einlässen für jede der Vielzahl von Mehrwellenextrudervorrichtungen (11, 11', 11") in verschiedenen jeweiligen Abständen bezüglich des Auslasses (12) befinden.

2. Mischvorrichtung nach Anspruch 1, wobei jede Ringextrudervorrichtung mindestens 8 oder mindestens parallel 12 Schrauben umfasst, die sich gemeinsam im Uhrzeigersinn oder Gegenuhrzeigersinn in derselben oder unterschiedlichen Richtungen drehen.

3. Mischvorrichtung nach Anspruch 1, wobei die Vielzahl von Mehrwellenextrudervorrichtungen (11, 11', 11") so angeordnet ist, dass sie sequentiell arbeiten, wobei die Mischvorrichtung (10) bevorzugt zwei oder drei solcher Mehrwellenextrudervorrichtungen umfasst, die so angeordnet sind, dass sie sequentiell arbeiten.

4. Mischvorrichtung nach Anspruch 1, weiter mindestens eine Speise-Zahnradpumpe (25) umfassend, die so angeordnet ist, dass sie wirksam mindestens eine der Vielzahl von Mehrwellenextrudervorrichtungen (11, 11', 11") mit mindestens einem Material speist.

5. Mischvorrichtung nach Anspruch 3, weiter mindestens eine Speise-Zahnradpumpe (25) umfassend, die so angeordnet ist, dass sie wirksam die erste Mehrwellenextrudervorrichtung (11) in der Abfolge von Mehrwellenextrudervorrichtungen (11, 11', 11") mit mindestens einem Material speist.

6. Mischvorrichtung nach Anspruch 1, weiter mindestens eine stromabwärtige Zahnradpumpe (25) umfassend, die auf solche Weise angeordnet ist, dass sie wirksam von mindestens einer der Vielzahl von Mehrwellenextrudervorrichtungen (11, 11', 11") mit dem von der mindestens einen Mehrwellenextrudervorrichtung extrudierten gemischten Material gespeist wird.

7. Mischvorrichtung nach Anspruch 1, wobei die Vielzahl von Mehrwellenextrudervorrichtungen (11, 11', 11") so angeordnet ist, dass sie sequentiell arbeiten, und wobei sich mindestens eine stromabwärtige Zahnradpumpe (25) derart zwischen zweien der Vielzahl von Mehrwellenextrudervorrichtungen befindet, dass sie wirksam von einer der zwei Mehrwellenextrudervorrichtungen mit dem in der besagten Mehrwellenextrudervorrichtung gemischten Material gespeist wird und sie die andere der zwei Mehrwellenextrudervorrichtungen mit mindestens einem Material speist.

8. Mischvorrichtung nach Anspruch 1, wobei die mindestens eine weitere Mischvorrichtung eine Mehrwellenextrudervorrichtung oder eine Zahnradpumpe ist.

9. Mischvorrichtung nach Anspruch 1, umfassend zwei oder drei Mehrwellenextrudervorrichtungen, die so angeordnet sind, dass sie im Parallelbetrieb arbeiten.

10. Verfahren zur Herstellung einer Kautschukmischung, wobei das Verfahren umfasst:
Bereitstellen einer Mischvorrichtung gemäß mindestens einem der vorhergehenden Ansprüche;
Speisen mindestens einer der Mehrwellenextrudervorrichtungen mit mindestens einem Polymerrohmaterial (16) oder einem Gemisch verschiedener Polymerrohmaterialien durch einen Einlass der Vielzahl von Einlässen;
Speisen jeder der Mehrwellenextrudervorrichtungen (11, 11', 11") mit mindestens einem weiteren Rohmaterial (15) durch einen anderen Einlass der Vielzahl von Einlässen;
parallel Betreiben der Vielzahl von Mehrwellenextrudervorrichtungen (11, 11', 11") und in jeder der Mehrwellenextrudervorrichtungen Mischen einer jeweiligen Kautschukmischung (5, 5', 5"); und
Extrudieren der jeweiligen Kautschukmischungen (5, 5', 5") von jeder der Mehrwellenextrudervorrichtungen (11, 11', 11").

11. Verfahren nach Anspruch 10, weiter das Mischen der von jeder der Mehrwellenextrudervorrichtungen (11, 11', 11") extrudierten jeweiligen Kautschukmischungen (5, 5', 5") in einer nachfolgenden Mischvorrichtung, wie etwa einer nachfolgenden Mehrwellenextrudervorrichtung, oder Zuführen der von jeder der Mehrwellenextrudervorrichtungen (11, 11', 11") extrudierten jeweiligen Kautschukmischungen (5, 5', 5") zu einer gemeinsamen Zahnradpumpenvorrichtung (25).

12. Verfahren zur Herstellung einer Kautschukmischung, wobei das Verfahren umfasst:
Bereitstellen einer Mischvorrichtung gemäß mindestens einem der vorhergehenden Ansprüche;
sequentiell Betreiben der Vielzahl von Mehrwellenextrudervorrichtungen (11, 11', 11");
Speisen einer ersten der Vielzahl von Mehrwellenextrudervorrichtungen mit mindestens einem Polymerrohmaterial (16) oder einer Mischung verschiedener Polymerrohmaterialien durch einen Einlass der Vielzahl von Einlässen;
Speisen der ersten Mehrwellenextrudervorrichtung (11) mit mindestens einem weiteren Polymerrohmaterial (15) durch einen anderen Einlass der Vielzahl von Einlässen;
in der ersten Mehrwellenextrudervorrichtung (11) Mischen des mindestens einen Polymerrohmaterials (16) oder des jeweiligen Gemischs der verschiedenen Polymerrohmaterialien und des mindestens einen weiteren Rohmaterials (15) zur Herstellung einer Kautschukmischung (5) in der ersten Mehrwellenextrudervorrichtung (11);
Extrudieren der Kautschukmischung (5) von der ersten Mehrwellenextrudervorrichtung (11);
Einspeisen der Kautschukmischung (5) in eine zweite Mehrwellenextrudervorrichtung (11') der Vielzahl von Mehrwellenextrudervorrichtungen (11, 11', 11").

## Revendications

1. Appareil de mélange pour la confection d'un composé de caoutchouc, l'appareil du mélange (10) comprenant plusieurs dispositifs d'extrusion (11, 11', 11") du type à arbres multiples, chacun comprenant au moins une entrée pour la réception de plusieurs matières qui doivent être alimentées dans le dispositif d'extrusion et une sortie (12) pour évacuer une matière mélangée ayant fait l'objet d'une extrusion via le dispositif d'extrusion, dans lequel :
(i) les dispositifs d'extrusion (11, 11', 11") du type à arbres multiples sont conçus de telle façon que de manière opérationnelle, l'extrudat d'au moins un desdits plusieurs dispositifs d'extrusion du type à arbres multiples peut être alimenté dans l'entrée d'au moins un autre desdits plusieurs dispositifs d'extrusion du type à arbres multiples ; ou
(ii) les dispositifs d'extrusion (11, 11', 11") du type à arbres multiples sont conçus pour travailler en parallèle de telle façon que de manière opérationnelle, les extrudats desdits plusieurs dispositifs d'extrusion du type à arbres multiples peuvent être alimentés de manière conjointe dans l'entrée d'au moins un autre dispositif de mélange ;
**caractérisé en ce que**
chacun desdits plusieurs dispositifs d'extrusion du type à arbres multiples représente un dispositif d'extrusion de configuration annulaire comprenant au moins six vis parallèles effectuant des rotations de manière conjointe dans le sens des aiguilles d'une montre ou dans le sens contraire à celui des aiguilles d'une montre dans la même direction ou dans des directions différentes ; et **en ce que**
chacun desdits plusieurs dispositifs d'extrusion (11, 11', 11") du type à arbres multiples comprend une sortie (12) à l'extrémité aval du dispositif d'extrusion respectif du type à arbres multiples et plusieurs entrées le long d'un arbre du dispositif d'extrusion respectif du type à arbres multiples ; dans lequel les entrées parmi lesdites plusieurs entrées pour chacun desdits plusieurs dispositifs d'extrusion (11, 11', 11") du type à arbres multiples sont disposées à des distances respectives différentes par rapport à la sortie (12).

2. Appareil de mélange selon la revendication 1, dans lequel chaque dispositif d'extrusion de configuration annulaire comprend au moins 8 ou au moins 12 vis parallèles, effectuant des rotations de manière conjointe dans le sens des aiguilles d'une montre ou dans le sens contraire à celui des aiguilles d'une montre dans la même direction ou dans des directions différentes.

3. Appareil de mélange selon la revendication 1, dans lequel lesdits plusieurs dispositifs d'extrusion (11, 11', 11") du type à arbres multiples sont conçus pour travailler en séquence, l'appareil de mélange (10) comprenant de préférence deux ou trois dispositifs d'extrusion de cette nature du type à arbres multiples qui sont conçus pour travailler en séquence.

4. Appareil de mélange selon la revendication 1, comprenant en outre au moins une pompe d'alimentation à engrenages (25) qui est conçue d'une façon telle que d'une manière fonctionnelle elle alimente au moins un desdits plusieurs dispositifs d'extrusion (11, 11', 11") du type à arbres multiples avec au moins une matière.

5. Appareil de mélange selon la revendication 3, comprenant en outre au moins une pompe d'alimentation à engrenages (25) qui est conçue d'une façon telle que d'une manière fonctionnelle elle alimente le premier dispositif d'extrusion (11) du type à arbres multiples dans la séquence des dispositifs d'extrusion (11, 11', 11") du type à arbres multiples avec au moins une matière.

6. Appareil de mélange selon la revendication 1, comprenant en outre au moins une pompe d'alimentation à engrenages (25) en aval qui est conçue d'une façon telle que d'une manière fonctionnelle elle est alimentée par au moins un desdits plusieurs dispositifs d'extrusion (11, 11', 11") du type à arbres multiples avec la matière mélangée extrudée par ledit au moins un dispositif d'extrusion du type à arbres multiples.

7. Appareil de mélange selon la revendication 1, dans lequel lesdits plusieurs dispositifs d'extrusion (11, 11', 11") du type à arbres multiples sont conçus pour travailler en séquence et dans lequel au moins une pompe d'alimentation à engrenages (25) est située entre deux desdits plusieurs dispositifs d'extrusion du type à arbres multiples, de telle façon que d'une manière opérationnelle elle est alimentée par l'un desdits deux dispositifs d'extrusion du type à arbres multiples avec la matière mélangée dans ledit dispositif d'extrusion du type à arbres multiples et alimente l'autres desdits deux plusieurs dispositifs d'extrusion du type à arbres multiples avec au moins une matière.

8. Appareil de mélange selon la revendication 1, dans lequel au moins un dispositif de mélange supplémentaire représente un dispositif d'extrusion du type à arbres multiples ou une pompe à engrenages.

9. Appareil de mélange selon la revendication 1, comprenant deux ou trois dispositifs d'extrusion du type à arbres multiples conçus pour travailler en parallèle.

10. Procédé pour la confection d'un composé de caoutchouc, le procédé comprenant le fait de :
procurer un appareil de mélange selon au moins une des revendications précédentes ;
alimenter au moins un des dispositifs d'extrusion du type à arbres multiples avec au moins une matière polymère de départ (16) ou avec un mélange de différentes matières polymères de départ en passant par une entrée parmi lesdites plusieurs entrées ;
alimenter chacun desdits dispositifs d'extrusion (11, 11', 11") du type à arbres multiples avec au moins une matière de départ supplémentaire (15) en passant par une entrée différente parmi lesdites plusieurs entrées ;
activer lesdits plusieurs dispositifs d'extrusion (11, 11', 11") du type à arbres multiples en parallèle et mélanger dans chacun desdits dispositifs d'extrusion du type à arbres multiples un composé de caoutchouc respectif (5, 5', 5") ; et
extruder les composés de caoutchouc respectifs (5, 5', 5") à partir de chacun desdits dispositifs d'extrusion (11, 11', 11") du type à arbres multiples.

11. Procédé selon la revendication 10, comprenant en outre le fait de mélanger les composés de caoutchouc respectifs (5, 5', 5") extrudés à partir de chacun desdits dispositifs d'extrusion (11, 11', 11") du type à arbres multiples dans un dispositif de mélange ultérieur tel qu'un dispositif d'extrusion ultérieur du type à arbres multiples, ou bien le fait d'alimenter les composés de caoutchouc respectifs (5, 5', 5") extrudés à partir de chacun desdits dispositifs d'extrusion (11, 11', 11") du type à arbres multiples à un dispositif commun faisant office de pompe à engrenages (25.)

12. Procédé de confection d'un composé de caoutchouc, le procédé comprenant le fait de :
procurer un appareil de mélange selon au moins une des revendications précédentes ;
activer lesdits plusieurs dispositifs d'extrusion (11, 11', 11") du type à arbres multiples en séquence ;
alimenter au moins un desdits plusieurs dispositifs d'extrusion du type à arbres multiples avec au moins une matière polymère de départ (16) ou avec un mélange de différentes matières polymères de départ en passant par une entrée parmi lesdites plusieurs entrées ;
alimenter le premier dispositif d'extrusion (11) du type à arbres multiples avec au moins une matière de départ supplémentaire (15) en passant par une entrée différente parmi lesdites plusieurs entrées ;
mélanger dans le premier dispositif d'extrusion (11) du type à arbres multiples ladite au moins une matière polymère de départ (16) ou le mélange respectif de différentes matières polymères de départ et ladite au moins une matière de départ supplémentaire (15) dans le but de préparer, dans le premier dispositif d'extrusion (11) du type à arbres multiples, un composé de caoutchouc (5) ;
extruder le composé de caoutchouc (5) à partir du premier dispositif d'extrusion (11) du type à arbres multiples ;
alimenter le composé de caoutchouc (5) à un deuxième dispositif d'extrusion (11) du type à arbres multiples parmi lesdits plusieurs dispositifs d'extrusion (11, 11', 11") du type à arbres multiples.
